# EUROPEAN PATENT SPECIFICATION

(11) **EP 4 139 525 B1**
(45) Date of publication and mention of the grant of the patent: **05.06.2024**
(21) Application number: 21720869.3
(22) Date of filing: 15.04.2021
(51) Int. Cl.: D21H 19/10, B65D 27/04, D21H 27/00, B65D 65/18

(54) **TRANSPARENT PAPER OR CARDBOARD SUBSTRATE AND METHOD FOR ITS PRODUCTION**
TRANSPARENTES PAPIER- ODER KARTONSUBSTRAT UND VERFAHREN ZU DESSEN HERSTELLUNG
SUBSTRAT TRANSPARENT EN PAPIER OU EN CARTON ET SA MÉTHODE DE PRODUCTION

(30) Priority: 21.04.2020 SE 2050456
(43) Date of publication of application: 01.03.2023
(73) Proprietor: RISE RESEARCH INSTITUTES OF SWEDEN AB, 501 15 Borås (SE)
(72) Inventor: RÄTTÖ, Peter, 192 55 Sollentuna (SE)
(74) Representative: Zacco Sweden AB
(86) International application number: PCT/SE2021/050346
(87) International publication number: WO 2021/215981

(56) References cited:
- WO-A1-2019/096848
- JP-A- 2008 174 873
- US-A- 3 497 370

## Description

### TECHNICAL FIELD

The present invention relates to the field of transparent paper and cardboard substrates.

### BACKGROUND ART

Transparency is a characteristic, which can be desirable and non-desirable for packing material. It is desirable from the point of view that the consumer can see the contents of the package, and thus does not need to open the package to check that it is the right colour etc. It is not desirable from the point of view that the packaging should act as a light barrier or when the packaging should have a visible high-quality print. A higher print contrast is also achieved through a higher brightness caused by light scattering and thus a lower transparency.

Transparency as a property is nothing new in the context of paper and cardboard. However, it has usually been an undesirable feature and a low transparency or high opacity has been sought. This is for two reasons: 1) an opaque cellulosic fibre substrate with high light scattering is perceived as more white, a property so important for achieving high print density and large colour space, and 2) the risk of see through is lower for an opaque substrate. The paper and cardboard industry has therefore worked to increase opacity through pigment coatings and by maximizing the light-scattering surfaces.

Although transparency has been an undesirable characteristic, there is a demand for transparent substrates in the packaging industry. Today, there are a number of commercial alternatives for various purposes and applications made from regenerated cellulose or from microfibrils. Examples of these are tracing paper, glassine, wax paper and cellophane. However, several of these should be considered translucent rather than transparent.

Different approaches have been taken to produce transparent paper and cardboard. One approach is to use fibrils of very small size, nanocellulose, as these fibrils have no surfaces large enough to spread light. The size of the nanofibers will be of great importance for the optical properties of the paper as they lie around the boundary so that they can spread visible light. Such an approach is shown for example in US2016010279A1.

Another approach is to impregnate the paper or cardboard with a polymer having a refractive index similar to that of the cellulose fibres. Such an approach is shown for example in WO2019096848A1, wherein a fibre-based substrate is coated with a coating based on vinylidene chloride, styrene, for example styrene 1,3-butadiene, acrylic, polyester, or paraffin in the form of wax.

A third approach is grinding of fibres combined with impregnation, which is shown for example in US3424919A.

Even though different approaches have been taken to produce transparent paper and cardboard, there is still a demand for a simple and controllable method, which can be used to make parts or whole surfaces of a cardboard or paper transparent.

### SUMMARY OF THE INVENTION

It is an object of the present invention to provide a method of printing at least one transparent area on a major surface of a non-coated paper or cardboard substrate. The method can be used to make parts or whole surfaces of the cardboard or paper substrate transparent. Yet an object is to provide a packaging comprising the paper or cardboard substrate with the transparent portion.

According to a first aspect there is provided a method of printing at least one transparent area on a major surface of a non-coated paper or cardboard substrate, wherein an optical transmittance, as measured with spectrophotometry, through the substrate at a printed transparent area is at least 20% higher than through the substrate at a non-printed area of the same paper or cardboard substrate at a wavelength in the electromagnetic spectrum of wavelengths from 400 nm to 1000 nm that. The method comprising: contacting at least one area of a major surface of the non-coated paper or cardboard substrate with a polymerizing and drying or semi-drying oil composition using a printing press such as flexographic printing, silk screen printing, stream printing, planographic printing (offset), inkjet, wherein the amount of oil in the oil composition is at least 10%, the oil in the oil composition has a diffractive index of 1.4 to 1.6, and the at least one area ranges in size from 100 µm² to an entire area of the major surface of the substrate; allowing the oil composition to penetrate through the thickness of the substrate; and drying the at least one printed area, forming at least one printed transparent area on the substrate, whereby any content in a packaging or envelope formed by such substrate is visible from the outside through said at least one printed transparent area.

Non-coated paper and non-coated cardboard substrates is here meant paper or cardboard substrates that have not been coated with materials or polymers to improve print quality and appearance of the paper, including weight, surface gloss, smoothness or reduced ink absorbency. Such coatings may e.g. include Kaolinite, calcium carbonate, Bentonite, talc, chalk, china clay, synthetic binders, such as styrene-butadiene latexes and natural organic binders such as starch, chemical additives as dispersants, resins, or polyethylene.

Preferably, the paper may further not comprise any filler such as calcium carbonate, kaolin, precipitated calcium carbonate, talc and titanium dioxide.

The paper or cardboard substrate could have a fibre content of 10 g/m² to 500 g/m². The thickness of the paper/cardboard substrate could range from 10 µm to 500 µm, but also thicker substrates such as up to 1 mm or more can be used.

The optical transmittance measured through the substrate at the at least one treated area (and non-treated area) is an optical transmittance of light which is incident substantially perpendicular to the major surface of the substrate.

The at least one treated area may comprise the whole paper/cardboard substrate major surface or a smaller portion or portions of the substrate major surface.

In some embodiments, the light transmittance through the substrate at the at least one treated area may be at least 25%, at least 30%, at least 35%, at least 40%, at least 45%, or at least 50% higher than through the substrate at a non-treated area of the same paper or cardboard substrate.

The transmittance through the substrate at the at least one treated area may be 50% or more at wavelengths of 480 nm or greater.

A size of the at least one treated area may range from 100 µm² to the entire area of the major surface of the substrate.

The smallest size of a treated area, the resolution of the treated area, may be limited by the method used to prepare the treated area on the substrate. For example may a printing press such as flexographic printing, silk screen printing, stream printing, planographic printing (offset), inkjet, a size press, or a coater such as roll coater, blade coater, rod coater, spray coater or curtain coater be used to prepare the treating area.

The size of a treated are may range from 100 µm² to 1 m², 100 µm² to 1 dm², 100 µm² to 1 cm², or 100 µm² to 1 mm².

The drying step should preferably take place after the step of allowing the oil composition to penetrate through the thickness of the substrate. The duration of the step of allowing the composition to penetrate through the thickness of the substrate is dependent on a number of parameters, such as the thickness of the substrate, the fibre content of the substrate, the concentration of oil in the oil composition, the amount of oil composition used etc. The time duration could for example be 20 seconds up to 20 minutes.

The refractive index of the oil may be from 1.4 to 1.6, or from 1.45 to 1.55. Such a refractive index matches the refractive index of cellulose fibres in the substrate (about 1.54 for cellulose and 1.53 for hemicellulose).

The polymerizing and drying or semi-drying oil composition should dry and polymerise when added to the paper or cardboard substrate.

The polymerizing and drying or semi-drying oil composition may comprise tung oil, perilla oil, soy bean oil, linseed oil, whale oil, oiticica oil, hempseed oil, walnut oil, safflower oil, dehydrated castor oil, herring oil, poppyseed oil, menhaden oil, sardine oil, chemically treated oils, such as esterified tall oil, or any combination thereof.

The tall oil may be esterified with a polyhydric alcohol such as glycerol, sorbitol, pentaerythritol, and/or ethylene glycol. Such an oil may be alkyd oil.

The polymerizing and drying or semi-drying oil composition may be in the form of an emulsion.

The amount of oil in the oil composition may be at least 20%, at least 30%, at least 40%, at least 50%, at least 60%, at least 70%, at least 80% or at least 90%.

The at least one treated area may be dried in room temperature.

Alternatively, the at least one treated area may be dried at an elevated temperature.

The method may further comprise a step of heating the oil composition before contacting the at least one area with the oil composition.

The step of contacting the at least one area with the oil composition may comprise using a printing press such as flexographic printing, silk screen printing, stream printing, planographic printing (offset), inkjet, a size press, or a coater such as a roll coater, a blade coater, a rod coater, a spray coater or a curtain coater.

Some of these techniques make is possible to print transparency where needed on a paper or cardboard substrate. This allows, for example, printing of windows on envelopes and packaging to view the contents or to print a line showing how much is left in a package. The resolution of a printed area may be down to µm level.

According to a second aspect there is provided a packaging comprising the non-coated paper or cardboard substrate produced as described above.

### BRIEF DESCRIPTION OF THE DRAWINGS

Fig. 1 schematically illustrates a method of preparing a non-coated paper or cardboard substrate with a treated area having an optical transmittance through the substrate at the treated area that is at least 20% higher than through the substrate at a non-treated area.
Fig. 2 illustrates a paper or cardboard substrate with a treated area and a non-treated area, wherein the optical transmittance through the substrate at the treated area is higher than through the non-treated area.
Fig. 3 shows a diagram with optical transmittance at different wavelengths through a treated area of a non-coated sack paper and through a non-treated area of the same sack paper.
Fig. 4 illustrates a packaging comprising a paper/cardboard substrate with a treated area and a non-treated area, wherein the optical transmittance through the substrate at the treated area is higher than through the non-treated area.

### DETAILED DESCRIPTION

There is a demand for transparent substrates for example in the packaging industry and a number of commercial alternatives for various purposes are available, such as polyolefin plastics, tracing paper, glassine, wax paper and cellophane. However, several of these should be considered translucent rather than transparent.

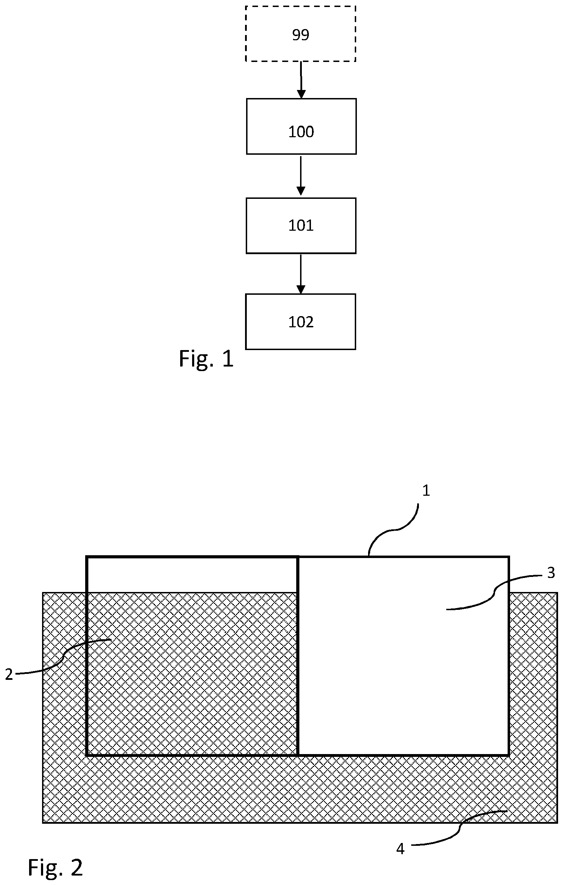

Below and in Fig. 1 is described a method for manufacturing a paper or cardboard substrate with a truly transparent portion. The method can be used to make parts or whole surfaces of a cardboard or paper substrate transparent. The resulting treated substrate is illustrated in Fig. 2.

The method comprises contacting 100 at least a portion of a major surface of a non-coated paper or cardboard substrate 1 with a polymerizing and drying or semi-drying oil composition to form a treated area 2 on the substrate 1. The oil in the oil composition should have a diffractive index of 1.4 to 1.6, or 1.45 to 1.55. Such a refractive index matches the refractive index of cellulose fibres in the paper or cardboard substrate (about 1.54 for cellulose and 1.53 for hemicellulose). The polymerizing and drying or semi-drying oil composition should dry and polymerise when added to the paper or cardboard substrate.

Drying oils or semi-drying oils are liquid oils that react with oxygen to form solid films. The hardening process of drying oils is not about the evaporation of water but a chemical reaction with oxygen that makes the components crosslinked. The crosslinking process is the result of autoxidation. The oil treated area may form a water protection barrier on the paper or cardboard substrate.

Drying oils may in general be characterized as being fatty oils containing glycerine in combination with a fatty acid, and liquid at room temperature. Fatty oils are insoluble in water, but are soluble in several organic solvents and can be made water borne in emulsion form.

The polymerizing and drying or semi-drying oil composition may comprise tung oil, perilla oil, soy bean oil, linseed oil, whale oil, oiticica oil, hempseed oil, walnut oil, safflower oil, dehydrated castor oil, herring oil, poppyseed oil, menhaden oil, sardine oil, chemically treated oils, such as esterified tall oil, or any combination thereof.

The tall oil may be esterified with a polyhydric alcohol such as glycerol, sorbitol, pentaerythritol, ethylene glycol. Such an oil may be alkyd oil.

The polymerizing and drying or semi-drying oil composition may be an emulsion and may comprise water and possibly also emulsifiers such as tensides.

The amount of oil in the oil composition is at least 10%, or may be at least 20%, at least 30%, at least 40%, at least 50%, at least 60%, at least 70%, at least 80% or at least 90%.

A better penetration of the oil composition may be obtained by changing the concentration of oil. With higher oil concentration less water need to be removed from the treated area of the paper or cardboard during the drying stage.

The oil is allowed to penetrate 101 through the thickness of the substrate 1 and thereafter the treated area 2 is dried 102. The treated area may be dried in room temperature. Alternatively, the treated area may be dried at an elevated temperature.

In addition to the use of an elevated temperature or as an alternative to using an elevated temperature, an increased pressure may be used during the drying stage to speed up the drying process.

The length of the drying step 102 is dependent on the O₂-levels. To speed up the drying process initiators and/or catalysts may be used. Such initiators and catalysts are well known in the art.

The treated area 2 of the paper or cardboard substrate 1 may by dry/non-sticky after the drying step 102.

The method may further comprise a step of heating 99 the oil composition before contacting 100 the area with the oil composition.

The oil composition may for example be heated to a temperature of up to 70°C. By heating the oil composition, the viscosity of the oil composition may be changed such that the oil composition more easily enters into the substrate 1.

The step of contacting 100 the area 2 with the oil may comprise using a printing press such as flexographic printing, silk screen printing, stream printing, planographic printing (offset), inkjet, a size press, or a coater such as a roll coater, a blade coater, a rod coater, a spray coater or a curtain coater.

Some of these techniques make is possible to print transparency where needed on a paper or cardboard substrate 1. This allows, for example, printing of windows on envelopes and packaging to view the contents or to print a line showing how much is left in a package. The resolution of a printed area may by down to µm level. A size of the at least one treated area may range from 100 µm² to the entire area of the major surface of the substrate 1.

The step of allowing the oil composition to penetrate 101 through the thickness of the substrate 1 may take place before the step of drying 102 the treated area.

With the method described above an optical transmittance obtained through the substrate 1 at the at least one treated area 2 is at least 20% higher than through the substrate 1 at a non-treated area 3 of the same paper or cardboard substrate 1 at a wavelength in the electromagnetic spectrum of wavelengths from 400 nm to 1000 nm.

In Fig. 1 is illustrated a paper or cardboard substrate 1 with a treated area 2 and a non-treated area 3. The substrate is lying on a checkered surface 4. The optical transmittance through the substrate 1 at the treated area 2 is higher than through the non-treated area 3. As illustrated in Fig. 1 it is possible to see the checkered surface 4 through the treated area 2 of the substrate 1 but not through the non-treated area 3.

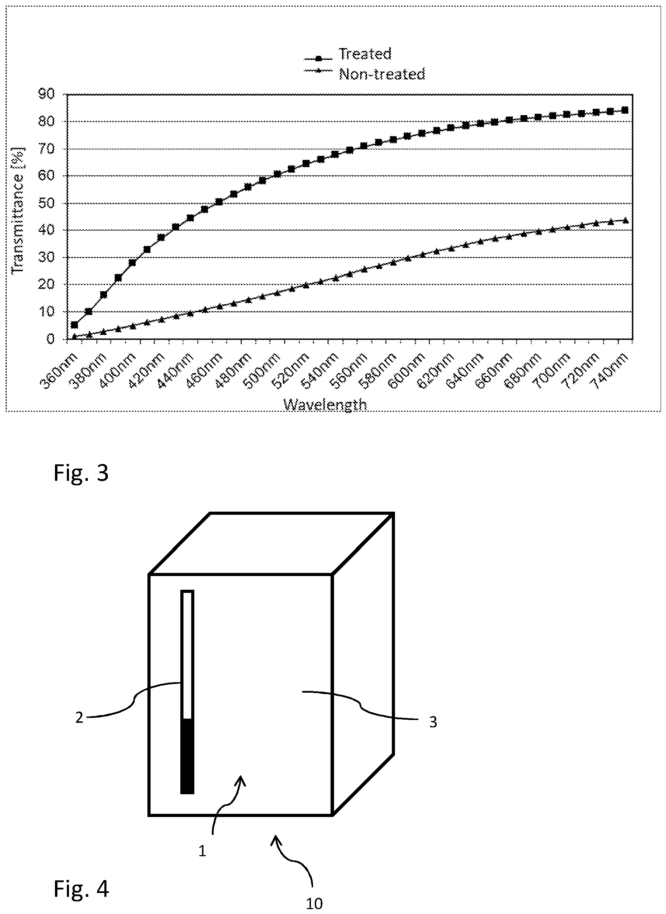

In Fig. 3 is shown a diagram with optical transmittances measured at different wavelengths through a treated area of a non-coated sack paper and through a non-treated area of the same sack paper at wavelengths between 360 nm and 740 nm.

The sack paper was treated using the method described above. The oil composition used was alkyd oil in emulsion with an oil concentration of 50% at room temperature. The oil composition was allowed to penetrate the substrate for 5 min and thereafter the sack paper was dried in an oven at 70 °C during 24 hours.

The optical transmittance was measured using a spectrophotometer, CM-3610d from Konica-Minolta.

As can be seen from Fig. 3 the optical transmittance for the treated area 2 is higher than the optical transmittance for the non-treated area 3, and is at least 20% higher. For some wavelengths the difference in transmittance may be as much as 50%. This enables transparency of treated areas of the substrate 1. At the higher wavelengths shown in the graph in Fig. 1 the light transmittance for the treated area 2 increases from about 40% to about 90%. The transmittance through the substrate 1 at the at least one treated area 2 may be 50% or more at wavelengths of 480 nm or more.

The transparency of the treated area 2 depends to a large extent on internal light scattering, which, in turn, depends on the proportion of light-scattering surfaces in the substrate 1, i.e. internal structural elements in the substrate 1 that are large enough to spread the light. Treatment with a polymerising and drying or semi-drying oil with a similar diffractive index for visible light as the cellulose fibres in the substrate 1 creates transparency by reducing the number of light scattering surfaces in the paper or cardboard substrate. The features of the paper/cardboard fibres and the optical characteristics of the oil need to cooperate to obtain the sought transparency of the substrate 1.

The above given example as illustrated in the graph in Fig. 3 should not be considered limiting for the scope of the present invention. In fact, the present method gives similar results for other non-coated paper or cardboard substrates and using other polymerizing and drying or semi-drying oil compositions than compositions comprising alkyde oil. Since the refractive index is similar for fibres in other fibrous substrates, it is safe to conclude that the method can be applied for other non- coated substrates.

As illustrated in Fig. 4, the non-coated paper or cardboard substrate 1 may for example be used in a packaging 10. The paper/cardboard substrate 1 can make up the whole packaging 10. Alternatively, the substrate 1 may constitute at least a portion of the packaging 10. The packaging 10 shown in Fig. 4 is provided with a transparent window consisting of the treated area 2 of the paper/cardboard substrate 1 making the content in the packaging visible from the outside. It is thus not necessary to open the packaging to check what is in it. With the method and substrate described above it is also possible to for example produce envelopes with transparent windows.

## Claims

1. Method of printing at least one transparent area on a major surface of a non-coated paper or cardboard substrate (1), wherein an optical transmittance, as measured with spectrophotometry, through said substrate (1) at a printed transparent area (2) is at least 20% higher than through the substrate (1) at a non-printed area (3) of the same paper or cardboard substrate (1) at a wavelength in the electromagnetic spectrum of wavelengths from 400 nm to 1000 nm that, the method comprising:
- contacting (100) at least one area (2) of a major surface of the non-coated paper or cardboard substrate (1) with a polymerizing and drying or semi-drying oil composition using a printing press such as flexographic printing, silk screen printing, stream printing, planographic printing (offset), inkjet, wherein the amount of oil in the oil composition is at least 10%, the oil in the oil composition has a diffractive index of 1.4 to 1.6, and the at least one area (2) ranges in size from 100 µm² to an entire area of the major surface of the substrate (1),
- allowing the oil composition to penetrate (101) through the thickness of the substrate (1), and
- drying (102) the at least one printed area (2), forming at least one printed transparent area on the substrate, whereby any content in a packaging or envelope formed by such substrate is visible from the outside through said at least one printed transparent area.

2. Method of claim 1, wherein the polymerizing and drying or semi-drying oil composition comprises tung oil, perilla oil, soy bean oil, linseed oil, whale oil, oiticica oil, hempseed oil, walnut oil, safflower oil, dehydrated castor oil, herring oil, poppyseed oil, menhaden oil, sardine oil, chemically treated oils, such as esterified tall oil, or any combination thereof.

3. Method of claim 1 or 2, wherein the polymerizing and drying or semi-drying oil composition is in the form of an emulsion.

4. Method of any of claims 1 to 3, wherein the amount of oil in the oil composition is at least 20%, at least 30%, at least 40%, at least 50%, at least 60%, at least 70%, at least 80% or at least 90%.

5. Method of any of claims 1-4, wherein the at least one printed area (2) is dried in room temperature.

6. Method of any of claims 1-4, wherein the at least one printed area (2) is dried at an elevated temperature.

7. Method of any of claims 1-6, further comprising a step of heating (99) the oil composition before contacting (100) the at least one area (2) with the oil composition.

8. Packaging (10) comprising the non-coated paper or cardboard substrate (1) produced in the method of any of claims 1-7.

## Patentansprüche

1. Verfahren zum Drucken mindestens eines transparenten Bereichs auf einer Hauptfläche eines unbeschichteten Papier- oder Kartonsubstrats (1), wobei eine optische Transmission, die durch Spektralphotometrie gemessen wird, durch das Substrat (1) bei einem bedruckten transparenten Bereich (2) mindestens 20 % größer ist, als sie durch das Substrat (1) bei einem unbedruckten Bereich (3) desselben Papier- oder Kartonsubstrats (1) bei einer Wellenlänge in dem elektromagnetischen Wellenlängenspektrum von 400 nm bis 1000 nm ist, wobei das Verfahren Folgendes umfasst:
- Kontaktieren (100) mindestens eines Bereichs (2) einer Hauptfläche des unbeschichteten Papier- oder Kartonsubstrats (1) mit einer polymerisierenden und trocknenden oder semitrocknenden Ölzusammensetzung unter Verwendung einer Druckpresse wie etwa Flexodruck, Siebdruck, Folgedruck, Flachdruck (Offset), Tintenstrahldruck, wobei die Menge an Öl in der Ölzusammensetzung mindestens 10 % beträgt, das Öl in der Ölzusammensetzung einen Brechungsindex von 1,4 bis 1,6 aufweist und der mindestens eine Bereich (2) von der Größe zwischen 100 µm² bis zu einem gesamten Bereich der Hauptfläche des Substrats (1) variiert,
- Erlauben der Ölzusammensetzung, durch die Dicke des Substrats (1) hindurchzudringen (101) und
- Trocknen (102) des mindestens einen bedruckten Bereichs (2), mindestens einen bedruckten transparenten Bereich auf dem Substrat bildend, wobei ein Inhalt in einer Verpackung oder einem Umschlag, die/der durch ein solches Substrat gebildet wird, von außen durch den mindestens einen bedruckten transparenten Bereich sichtbar ist.

2. Verfahren nach Anspruch 1, wobei die polymerisierende und trocknende oder semitrocknende Ölzusammensetzung Tungöl, Perillaöl, Sojaöl, Leinöl, Tran, Oititicaöl, Hanföl, Walnussöl, Distelöl, dehydriertes Rizinusöl, Heringsöl, Mohnöl, Menhadenöl, Sardinenöl, chemisch behandelte Öle wie etwa verestertes Tallöl oder eine beliebige Kombination davon umfasst.

3. Verfahren nach Anspruch 1 oder 2, wobei die polymerisierende und trocknende oder semitrocknende Ölzusammensetzung die Form einer Emulsion aufweist.

4. Verfahren nach einem der Ansprüche 1 bis 3, wobei die Menge an Öl in der Ölzusammensetzung mindestens 20 %, mindestens 30 %, mindestens 40 %, mindestens 50 %, mindestens 60 %, mindestens 70 %, mindestens 80 % oder mindestens 90 % beträgt.

5. Verfahren nach einem der Ansprüche 1-4, wobei der mindestens eine bedruckte Bereich (2) bei Zimmertemperatur getrocknet wird.

6. Verfahren nach einem der Ansprüche 1-4, wobei der mindestens eine bedruckte Bereich (2) bei einer erhöhten Temperatur getrocknet wird.

7. Verfahren nach einem der Ansprüche 1-6, ferner umfassend einen Schritt von Erhitzen (99) der Ölzusammensetzung vor dem Kontaktieren (100) des mindestens einen Bereichs (2) mit der Ölzusammensetzung.

8. Verpackung (10), umfassend das unbeschichtete Papier- oder Kartonsubstrat (1), das in dem Verfahren nach einem der Ansprüche 1-7 produziert wurde.

## Revendications

1. Procédé d'impression d'au moins une zone transparente sur une surface principale d'un substrat en papier ou en carton non couché (1), dans lequel une transmission optique, telle que mesurée par spectrophotométrie, à travers ledit substrat (1) au niveau d'une zone transparente imprimée (2) est au moins 20 % plus élevée qu'à travers le substrat (1) au niveau d'une zone non imprimée (3) du même substrat en papier ou en carton (1) à une longueur d'onde dans le spectre électromagnétique de longueurs d'onde de 400 nm à 1 000 nm que le procédé comprenant :
- la mise en contact (100) d'au moins une zone (2) d'une surface principale du substrat en papier ou en carton non couché (1) avec une composition d'huile polymérisable et siccative ou semi-siccative à l'aide d'une presse à imprimer telle qu'une impression flexographique, sérigraphie, impression en flux, impression planographique (offset), jet d'encre, dans lequel la quantité d'huile dans la composition d'huile est d'au moins 10 %, l'huile dans la composition d'huile a un indice de diffraction de 1,4 à 1,6, et l'au moins une zone (2) présente une taille qui varie de 100 µm² à une zone entière de la surface principale du substrat (1),
- le fait de laisser pénétrer la composition d'huile (101) à travers l'épaisseur du substrat (1), et
- le séchage (102) de l'au moins une zone imprimée (2), formant au moins une zone transparente imprimée sur le substrat, grâce à quoi tout contenu dans un emballage ou une enveloppe formé par un tel substrat est visible de l'extérieur à travers ladite au moins une zone transparente imprimée.

2. Procédé selon la revendication 1, dans lequel la composition d'huile polymérisable et siccative ou semi-siccative comprend de l'huile de tung, de l'huile de périlla, de l'huile de soja, de l'huile de lin, de l'huile de baleine, de l'huile d'oïticica, de l'huile de chanvre, de l'huile de noix, de l'huile de carthame, de l'huile de ricin déshydratée, de l'huile de hareng, de l'huile de pavot, de l'huile de menhaden, de l'huile de sardine, des huiles traitées chimiquement, telles que l'huile de tall estérifiée, ou toute combinaison de celles-ci.

3. Procédé selon la revendication 1 ou 2, dans lequel la composition d'huile polymérisable et siccative ou semi-siccative se présente sous la forme d'une émulsion.

4. Procédé selon l'une quelconque des revendications 1 à 3, dans lequel la quantité d'huile dans la composition d'huile est d'au moins 20 %, d'au moins 30 %, d'au moins 40 %, d'au moins 50 %, d'au moins 60 %, d'au moins 70 %, d'au moins 80 % ou d'au moins 90 %.

5. Procédé selon l'une quelconque des revendications 1 à 4, dans lequel l'au moins une zone imprimée (2) est séchée à température ambiante.

6. Procédé selon l'une quelconque des revendications 1 à 4, dans lequel l'au moins une zone imprimée (2) est séchée à une température élevée.

7. Procédé selon l'une quelconque des revendications 1 à 6, comprenant en outre une étape de chauffage (99) de la composition d'huile avant de mettre en contact (100) l'au moins une zone (2) avec la composition d'huile.

8. Emballage (10) comprenant le substrat en papier ou en carton non couché (1) produit par le procédé selon l'une quelconque des revendications 1 à 7.
